# FASCICULE DE BREVET EUROPEEN

(11) **EP 1 033 917 B1**
(45) Date de publication et mention de la délivrance du brevet: **30.01.2002**
(21) Numéro de dépôt: 98961205.6
(22) Date de dépôt: 13.11.1998
(51) Int. Cl.: A23C 19/076, A23C 19/09

(54) **COMPOSITION A BASE DE FROMAGE FRAIS**
ZUSAMMENSETZUNG AUF BASIS VON FRISCHKÄSE
FRESH CHEESE COMPOSITION

(30) Priorité: 26.11.1997 EP 97203700
(43) Date de publication de la demande: 13.09.2000
(73) Titulaire: SOCIETE DES PRODUITS NESTLE S.A., 1800 Vevey (CH)
(72) Inventeur: PARMANTIER, Claude, F-14100 Glos (FR)
(74) Mandataire: Archambault, Jean
(86) Numéro de dépôt international: EP9807335
(87) Numéro de publication internationale: WO9927796

(56) Documents cités:
- EP-A- 0 256 561
- EP-A- 0 680 698
- FR-A- 2 125 601
- FR-A- 2 133 293
- FR-A- 2 242 033
- FR-A- 2 315 854
- US-A- 2 508 663
- US-A- 4 228 189
- US-A- 4 425 369

## Description

La présente invention a pour objet une composition alimentaire à base de fromage frais et un procédé de préparation d'une telle composition.

Il est connu de préparer des gâteaux au fromage congelés.

Ainsi, US 4795650 décrit un procédé de préparation d'un gâteau aux fromages congelé obtenu par extrusion. Pour ce faire, une dispersion stable contenant, notamment, de la crème acidifiée, de la crème de fromage, de la crème, des blancs d'oeuf, du sucre, de l'eau et des arômes est traitée thermiquement, homogénéisée, aérée puis semi-congelée. Le mélange ainsi semi-congelé est extrudé à - 5° C et enfin congelé sous forme stable.

Le produit obtenu par ce type de procédé ne présente pas une texture bien aérée et, par ailleurs, ne peut pas être conservé à températures réfrigérées ou être soumis à des cycles de réfrigération-congélation, sans subir une altération au niveau de sa structure physique et de ses qualités organoleptiques.

FR-A-2 242 033 décrit une garniture fouettée à base de crème et d'un produit lacté acidifié apte au moussage. Le produit peut être soit à base de crème et de fromage frais, soit à base de crème et de yaourt. L'enseignement de ce document est que lorsqu'il contient du fromage frais, le produit peut être foisonné de manière que l'augmentation de volume, qui caractérise le foisonnement, soit dans une fourchette allant de 60 % (exemple 4) à 100 % (exemple 6), avec des valeurs intermédiaires de 67 % (exemple 1) et de 89 % (exemple 7).

US-A-4 425 369 concerne une préparation pour gâteau soufflé au fromage contenant du jaune d'oeuf. Les foisonnements indiqués sont respectivement 40 %, 47 % et 80 %.

FR-A-2 125 601 décrit un appareil de foisonnement par dissolution produisant une crème fouettée qui peut être congelée et décongelée, ne contenant pas de fromage.

EP-A-0 256 561 décrit la fabrication d'une masse de confiserie émulsionnée comme garniture des biscuits et gâteaux, par mélange successif à chaud d'une base de fromage frais, de yaourt et de lait condensé, avec un prémix de sucre et de farine de caroube, puis avec une masse pâteuse de corps gras, homogénéisation, pasteurisation, incorporation d'un gaz inerte et refroidissement de la masse crémeuse obtenue sous agitation pour cristalliser au moins une partie de la matière grasse et du sucre. Le foisonnement est de 25 à 100 %, de préférence 42,8 à 66,6 %.

La présente invention a pour but de proposer une composition alimentaire à base de fromage frais, onctueuse et à la texture lisse, pouvant être conservée à températures réfrigérées ou congelées, voire, même, pouvant subir des cycles de congélation-réfrigération, tout en demeurant onctueuse et stable.

A cet effet, la composition alimentaire selon la présente invention contient:
- un mélange chauffé et homogénéisé de 5-15% de lait ou de dérivé du lait, 0,2-1,5% d'émulsifiant, 20-40% de crème lactique, contenant 25-45% de matière grasse, et 0,2-1,5% d'épaississant,
- de 10 à 50 % de fromage frais, ajouté au mélange précédent à une température inférieure à 60° C et elle est foisonnée à 150 à 300 %.

Plus on foisonne la composition à base de fromage frais, plus on augmente son onctuosité et sa texture fine.

On a constaté avec surprise que, lors du foisonnement à des taux très élevés, la répartition du gaz se fait de manière fine et régulière dans la composition alimentaire selon la présente invention. Par ailleurs, la composition alimentaire, selon l'invention, à base de fromage frais est conservable de manière stable à températures réfrigérées ou peut être congelée, sans que sa texture fine et son onctuosité en soient altérées. Enfin, la composition à base de fromage frais selon la présente invention peut subir plusieurs cylcles de congélation-réfrigération, sans être altérée.

Dans la suite de la description, on emploiera l'expression "dérivé du lait" pour désigner du lait en poudre écrémé, du lait en poudre entier ou du lait condensé sucré.

Enfin, dans la suite de la description, on emploiera l'expresion "fromage frais" pour désigner du caillé frais et égoutté.

La composition à base de fromage frais peut donc subir des cycles de réfrigération-congélation, sans modification de sa structure physique et de ses qualités organoleptiques, par exemple.
Ainsi, on peut conserver cette composition à base de fromage frais à températures réfrigérées, dans des chaines de froid, comme les produits alimentaires du type yoghourts ou fromage frais, dans un emballage souple ou rigide ou la congeler. Elle peut donc être dégustée comme une mousse ou comme une crème glacée.

De préférence, la composition à base de fromage frais selon la présente invention présente une densité de 265 g/l-440 g/l.

La présente invention a également pour objet un procédé de préparation d'une telle composition alimentaire.
Dans le procédé selon la présente invention on prépare, un mélange contenant 5-15% de lait ou de dérivé du lait, 0,2-1,5% d'émulsifiant, 20-40% de crème lactique, contenant 25-45% de matière grasse, et 0,2-1,5% d'épaississant, on chauffe ce mélange à 35-80° C, on l'homogénéise, on maintient sa température inférieure à 60° C, on y ajoute 10-50% de fromage frais, de manière à obtenir une composition à base de fromage frais, enfin on foisonne cette composition à 150-300%, de manière à obtenir une composition à base de fromage frais onctueuse.

De préférence, on prépare, à 7-15° C, un mélange contenant 7-10% de lait ou de dérivé du lait, 0,7-1,1% d'émulsifiant, 27-35% de crème lactique, contenant 25-45% de matière grasse, et 0,5-1% d'épaississant.

On peut préchauffer le lait ou le dérivé de lait à 75-90° C et y ajouter 0,1-10% de matière grasse végétale, par rapport au poids total de la composition à base de fromage frais, par exemple. La matière grasse végétale, dont le point de fusion est supérieur à 30° C, peut être hydrogénée ou non, par exemple. Elle donne de l'onctuosité à la composition à base de fromage frais à congeler. Par ailleurs, elle permet de pallier àux problèmes des effets de durcissement d'un produit hautement foisonné au cours de sa conservation.

La crème lactique sert à augmenter les qualités organoleptiques de la composition à base de fromage frais, notamment son onctuosité, par exemple.

On peut utiliser comme épaississant de la gélatine, de la carboxyméthylcellulose, de la gomme xanthane, de la gomme de guar, de la farine de caroube, de l'amidon et/ou de la pectine, de manière à augmenter la viscosité de la composition à base de fromage frais et permettre une meilleure conservation à températures réfrigérées.

On peut utiliser comme émulsifiant un monoglycéride, un diglycéride et/ou de la lécithine, de manière à permettre un meilleur foisonnement à 150-300% de la composition à base de fromage frais, par exemple.

On chauffe donc ensuite le mélange à 31-80° C, de manière à maintenir- la matière grasse en fusion et permettre une bonne homogénéisation du mélange.

Puis, on peut traiter le mélange dans un homogénéisateur à 20-300 bar, de manière à éclater les globules de matières grasses contenues dans le mélange et à obtenir un mélange homogène à la texture lisse, par exemple.

On peut pasteuriser alors le mélange à une température de 82-97° C, par exemple.

On maintient ensuite sa température inférieure à 60° C, de préférence à 45-57° C, de manière à éviter que le fromage frais ne forme des grumeaux lorsqu'on l'ajoute au mélange.

On ajoute donc au mélange 10-50% de fromage frais.

On peut ajouter au mélange 0-15% de sucre et/ou 0,1-1,5% de sel, par exemple.
On peut utiliser comme sucre, du saccharose, du sirop de sucre inverti, du sirop de glucose et/ou du miel, par exemple.

On peut ajouter au mélange 0-25% de produits aromatiques, par exemple.
Si, on prépare une composition à base de fromage frais sucrée, on peut notamment ajouter, comme produit aromatique, du cacao, du café, du caramel, des noisettes, des amandes, de la vanille, des fruits en morceaux et/ou entiers et/ou du sirop et/ou sous forme de jus concentré et/ou d'arôme concentré de fruits.
On peut utiliser du cacao, du café, des noisettes ou de la vanille, sous forme solide, notamment en poudre, ou sous forme liquide, par exemple.
On peut notamment utiliser, du citron, des cerises, des fraises, des framboises, des mûres, des abricots ou des pêches, comme fruits entiers et/ou en morceaux et/ou en sirop. Les fruits entiers et/ou en morceaux peuvent être des fruits confits ou non, des fruits semi-confits et/ou des fruits lyophilisés, par exemple.

Si on prépare une composition à base de fromage frais salée, on peut notamment ajouter, comme produit aromatique, des légumes en morceaux et/ou entiers, des épices, des aromates, de la viande, des fruits de mer et/ou du poisson, par exemple.

Enfin on foisonne la composition à 150-300%, de manière à obtenir une composition à base de fromage frais onctueuse. On peut la foisonner en lui incorporant, par injection en continu, notamment 600-800 ml d'un gaz inerte, tel que l'azote ou d'autres gaz, tels que l'air ou le dioxyde de carbone, par litre de composition, par exemple.
Si on foisonne la composition à 200-300%, on abaisse, de préférence, sa température à 7-15° C, avant de la foisonner.

Si on foisonne la composition à 150-200%, on abaisse, de préférence, sa température à une température inférieure à 30° C, avant de la foisonner.

On peut ensuite conserver jusqu'à 28 jours cette composition à base de fromage frais à températures réfrigérées.

La composition à base de fromage frais ainsi que le procédé de préparation, selon la présente invention, sont décrits plus en détails dans les exemples ci-après où les pourcentages sont donnés en poids, sauf indication contraire.

### Exemple 1

On prépare une composition à base de fromage frais à l'arôme framboise.

Pour ce faire, on préchauffe 8,36% de lait écrémé à 80° C au quel on ajoute 5,06% de matière grasse de coco.
Puis l'on prépare, à 10° C, un mélange contenant le lait auquel on a ajouté la matière grasse de coco, 0,97% de lécithine, 29,04% de crème lactique, contenant 40% de matière grasse, et 0,57% de gélatine.

On chauffe le mélange à 70° C et on le traite dans un homogénéisateur à 40 bar.

On le pasteurise à 94° C pendant 15 secondes.

On maintient ensuite la température du mélange à 55° C et on y ajoute 33% de fromage frais, 18% de framboises sur sucre et 5% de sucre inverti à 66%, de manière à obtenir une composition à base de fromage frais.

On abaisse sa température à 8° C, avant de la foisonner à un taux de foisonnement de 300%, de manière à la rendre onctueuse.

La composition à base de fromage frais à l'arôme framboise présente alors une densité de 268 g/l.

Enfin, on la conditionne dans une barquette et on la conserve dans une chaîne de froid à 8° C.

Le consommateur peut ensuite la conserver à températures réfrigérées et la déguster comme une mousse ou la congeler et la déguster comme une créme glacée. Cette composition peut subir des cycles de congélation-réfrigération, sans qu'elle en soit altérée.

### Exemple 2

On prépare une composition à base de fromage frais à l'arôme cerise.

Pour ce faire, on préchauffe 10% de lait écrémé à 80° C au quel on ajoute 2% de matière grasse de coco.
Puis l'on prépare, à 8° C, un mélange contenant le lait auquel on a ajouté la matière grasse de coco, 0.8% de lécithine, 34,6% de crème lactique, contenant 40% de matière grasse, et 0,5% de gélatine.

On chauffe le mélange à 60° C et on le traite dans un homogénéisateur à 60 bar.

On le pasteurise à 90° C pendant 20 secondes.

On maintient ensuite la température du mélange à 40° C et on y ajoute 40% de fromage frais, 0,1% d'arôme concentré de cerise et 12% de sucre inverti à 66%, de manière à obtenir une composition à base de fromage frais.

On abaisse sa température à 7° C, avant de la foisonner à un taux de foisonnement de 200%, de manière à la rendre onctueuse

La composition à base de fromage frais à l'arôme cerise présente alors une densité de 350 g/l.

On la conditionne alors dans un emballage souple et on la conserve dans une chaîne de froid à 8° C.

Le consommateur peut la conserver à températures réfrigérées et la déguster sous forme de mousse ou la congeler et la déguster sous forme de crème glacée. Cette composition peut subir des cycles de congélation-réfrigération, sans qu'elle subisse des altérations.

### Exemple 3

On prépare une composition à base de fromage frais à l'arôme abricot.

Pour ce faire, on préchauffe 12% de lait écrémé à 80° C au quel on ajoute 10% de matière grasse de coco.
Puis l'on prépare, à 10° C, un mélange contenant le lait auquel on a ajouté la matière grasse de coco, 1,1% de monoglycéride, 22% de crème lactique, contenant 40% de matière grasse, et 0,9% de gélatine.

On chauffe le mélange à 60° C et on le traite dans un homogénéisateur à 80 bar.

On le pasteurise à 90° C pendant 20 secondes.

On maintient ensuite la température du mélange à 40° C et on y ajoute 28% de fromage frais, 24% d'abricots sur sucre et 2% de sucre inverti à 66%, de manière à obtenir une composition à base de fromage frais.

On abaisse sa température à 7° C, avant de la foisonner à un taux de foisonnement de 150%, de manière à la rendre onctueuse

La composition à base de fromage frais à l'arôme abricot présente alors une densité de 430 g/l

On la conditionne dans une barquette en plastique et on la conserve dans une chaîne de froid à 8° C.

Le consommateur peut déguster cette composition à base de fromage frais à l'arôme abricot sous forme d'une mousse, après stockage à températures réfrigérées ou la congeler, de manière à obtenir une crème glacée à base de fromage frais à l'arôme abricot. Cette composition à base de fromage frais peut subir des cycles de congélation-réfrigération, sans qu'elle en soit altérée.

### Exemple 4

On prépare une composition à base de fromage frais au poisson.

Pour ce faire, on prépare, à 10° C, un mélange contenant 10,5% de lait écrémé, 0,8% de lécithine, 31,1% de crème lactique, contenant 40% de matière grasse, 0,5% d'amidon et 0,8% de gélatine.

On chauffe le mélange à 70° C et on le traite dans un homogénéisateur à 50 bar.

On le pasteurise à 92° C pendant 2 min.

On miantient ensuite la température du mélange à 50° C et on y ajoute 45% de fromage frais, 1% de sel et 10,3% d'une préparation culinaire contenant des petits légumes, des morceaux de saumon et de lotte et des épices, de manière à réaliser une composition à base de fromage frais.

On abaisse sa température à 8° C, avant de la foisonner à un taux de foisonnement de 150%, de manière à la rendre onctueuse.

Cette composition à base de fromage frais au poisson présente une densité de 320 g/l.

On la conditionne ensuite dans une barquette en plastique et on la conserve dans une chaîne de froid à 8° C.

Le consommateur peut déguster cette composition à base de fromage frais au poisson directement après stockage à températures réfrigérées ou la congeler. Cette composition peut subir des cycles de congélation-réfrigération, sans qu'elle subisse des altérations.

## Revendications

1. Composition alimentaire à base de fromage fiais, onctueuse et à la texture lisse, **caractérisée par le fait qu'**elle contient
- un mélange chauffé et homogénéisé de 5-15% de lait ou de dérivé du lait, 0,2-1,5% d'émulsifiant, 20-40% de crème lactique, contenant 25-45% de matière grasse, et 0,2-1,5% d'épaississant,
- de 10 à 50 % de fromage frais, ajouté au mélange précédent à une température inférieure à 60° C et
qu'elle est foisonnée à 150 à 300 %.

2. Composition alimentaire selon la revendication 1, **caractérisée par le fait qu'**elle a une densité de 265 à 440 g/l.

3. Procédé de préparation d'une composition alimentaire selon l'une des revendications 1 et 2 dans lequel:
- on prépare un mélange contenant 5-15% de lait ou de dérivé du lait, 0,2-1,5% d'émulsifiant, 20-40% de crème lactique, contenant 25-45% de matière grasse, et 0,2-1,5% d'épaississant,
- on chauffe ce mélange à 31-80° C,
- on l'homogénéise,
- on maintient sa température inférieure à 60° C,
- on y ajoute 10-50% de fromage frais, de manière à obtenir une composition à base de fromage frais,
- enfin on foisonne cette composition à 150-300%, de manière à obtenir une composition à base de fromage frais onctueuse.

4. Procédé selon la revendication 3, dans lequel on préchauffe le lait ou le dérivé de lait à 75-90° C et on y ajoute 0,1-10% de matière grasse végétale, par rapport au poids total de la composition à base de fromage frais.

5. Procédé selon l'une des revendications 3 et 4, dans lequel on homogénéise le mélange à 20-300 bar.

6. Procédé selon la revendication 5, dans lequel on pasteurise le mélange à 82-97° C après l'avoir homogénéisé.

7. Procédé selon l'une des revendications 3 à 6, dans lequel on ajoute au mélange 0-15% de sucre et/ou 0,1-1,5% de sel.

8. Procédé selon l'une des revendications 3 à 7, dans lequel on ajoute au mélange Jusqu'à 25% de produits aromatiques.

9. Procédé selon l'une des renvendications 3 à 8, dans lequel on abaisse la température de la composition à 7-15° C, avant de foisonner à 200-300%.

10. Procédé selon l'une des revendications 3 à 8, dans lequel on abaisse la température de la composition à une température inférieure à 30° C, avant de la foisonner à 150-200%.

## Patentansprüche

1. Cremige Nahrungsmittelzusammensetzung mit glatter Textur auf der Basis von Frischkäse, **dadurch gekennzeichnet, dass** sie folgendes enthält:
- eine erhitzte und homogenisierte Mischung aus 5-15% Milch oder Milchderivat, 0,2-1,5% Emulgator, 20-40% Milchsahne mit 25-45% Fett und 0,2-1,5% Verdickungsmittel,
- 10 bis 50% Frischkäse, der der vorhergehenden Mischung bei einer Temperatur unter 60°C beigegeben wurde, und
- dass ihr Volumen auf 150 bis 300% vergrößert ist.

2. Nahrungsmittelzusammensetzung nach Anspruch 1, **dadurch gekennzeichnet, dass** sie eine Dichte von 265 bis 440 g/l aufweist.

3. Verfahren zur Herstellung einer Nahrungsmittelzusammensetzung nach einem der Ansprüche 1 und 2, bei dem man
- eine Mischung herstellt, die 5-15% Milch oder Milchderivat, 0,2-1,5% Emulgator, 20-40% Milchsahne mit 25-45% Fett und 0,2-1,5% Verdickungsmittel enthält,
- diese Mischung auf 31-80°C erhitzt,
- sie homogenisiert,
- ihre Temperatur unter 60°C hält,
- ihr 10-50% Frischkäse zur Bildung einer Zusammensetzung auf Frischkäsebasis beigibt und
- das Volumen dieser Zusammensetzung auf 150-300% vergrößert, so dass man eine cremige Zusammensetzung auf Frischkäsebasis erhält.

4. Verfahren nach Anspruch 3, bei dem man die Milch oder das Milchderivat auf 75-90°C vorerhitzt und ihr bzw. ihm 0,1-10% Pflanzenfett, bezogen auf das Gesamtgewicht der Zusammensetzung auf Frischkäsebasis, beigibt.

5. Verfahren nach einem der Ansprüche 3 und 4, bei dem man die Mischung unter 20-300 bar honmogenisiert.

6. Verfahren nach Anspruch 5, bei dem man die Mischung nach dem Homogenisieren bei 82-97°C pasteurisiert.

7. Verfahren nach einem der Ansprüche 3 bis 6, bei dem man der Mischung 0-15% Zucker und/oder 0,1-1,5% Salz beigibt.

8. Verfahren nach einem der Ansprüche 3 bis 7, bei dem man der Mischung bis zu 25% aromatische Produkte beigibt.

9. Verfahren nach einem der Ansprüche 3 bis 8, bei dem man die Temperatur der Zusammensetzung auf 7-15°C senkt, bevor ihr Volumen auf 200-300% vergrößert wird.

10. Verfahren nach einem der Ansprüche 3 bis 8, bei dem man auf 150-200% die Temperatur der Zusammensetzung auf eine Temperatur unter 30°C senkt, bevor ihr Volumen auf 150-200% vergrößert wird.

## Claims

1. Creamy, smooth-textured food composition based on fromage frais, **characterized in that** it contains:
- a homogenized heated mixture of 5-15 % milk or milk derivative, 0.2-1.5 % emulsifier, 20-40 % milk cream containing 25-45 % fats, and 0.2-1.5 % thickener,
- from 10 to 50 % fromage frais, added to the preceding mixture at a temperature below 60°C and
that it is expanded by 150 to 300 %.

2. Food composition according to claim 1, **characterized in that** it has a density of 265 to 440 g/l.

3. Method for preparing a food composition according to either of claims 1 or 2, wherein:
- a mixture is prepared containing 5-15 % milk or milk derivative, 0.2-1.5 % emulsifier, 20-40 % milk cream containing 25-45 % fats, and 0.2-1.5 % thickener,
- this mixture is heated at 31-80°C,
- it is homogenized,
- its temperature is held below 60°C,
- 10-50% fromage frais is added thereto so as to obtain a composition based on fromage frais,
- this composition is finally expanded by 150-300 %, so as to obtain an oily composition based on fromage frais.

4. Method according to claim 3, wherein the milk or milk derivative is heated to 75-90°C and 0.1-10 % vegetable fat is added thereto, with respect to the total weight of the composition based on fromage frais.

5. Method according to either of claims 3 or 4, wherein the mixture is homogenized at 20-300 bar.

6. Method according to claim 5, wherein the mixture is pasteurised at 82-97°C after having been homogenized.

7. Method according to one of claims 3 to 6, wherein 0-15 % sugar and/or 0.1-1.5 % salt is/are added to the mixture.

8. Method according to one of claims 3 to 7, wherein up to 25 % flavouring products are added to the mixture.

9. Method according to one of claims 3 to 8, wherein the temperature of the composition is lowered to 7-15°C, before expansion by 200-300 %.

10. Method according to one of claims 3 to 8, wherein the temperature of the composition is lowered to a temperature below 30°C, before expansion by 150-200 %.
